# EUROPÄISCHE PATENTSCHRIFT

(11) **EP 4 182 559 B1**
(45) Veröffentlichungstag und Bekanntmachung des Hinweises auf die Patenterteilung: **03.09.2025**
(21) Anmeldenummer: 21745960.1
(22) Anmeldetag: 15.07.2021
(51) Int. Cl.: F04B 39/02, F04C 29/02

(54) **TEMPERATURMANAGEMENTSYSTEM, WÄRMEPUMPE SOWIE VERFAHREN ZUM REGELN EINER SCHMIERMITTEL-TEMPERATUR**
TEMPERATURE MANAGEMENT SYSTEM, HEAT PUMP, AND METHOD FOR CONTROLLING A LUBRICANT TEMPERATURE
SYSTÈME DE GESTION DE TEMPÉRATURE, POMPE À CHALEUR ET PROCÉDÉ DE RÉGULATION D'UNE TEMPÉRATURE DE LUBRIFIANT

(30) Priorität: 16.07.2020 DE 102020118854
(43) Veröffentlichungstag der Anmeldung: 24.05.2023
(73) Patentinhaber: SPH Sustainable Process Heat GmbH, 51491 Overath (DE)
(72) Erfinder: HAMACHER, Tim, 53819 Neunkirchen-Seelscheid (DE); MÜCK, Andreas, 51467 Bergisch Gladbach (DE)
(74) Vertreter: Patentanwälte Bauer Vorberg Kayser
(86) Internationale Anmeldenummer: PCT/EP2021/069722
(87) Internationale Veröffentlichungsnummer: WO 2022/013340

(56) Entgegenhaltungen:
- WO-A1-2015/044613
- WO-A1-2019/074108
- US-A- 5 318 151
- US-A1- 2009 087 320
- US-A1- 2012 090 340
- US-A1- 2013 152 882

## Beschreibung

Die vorliegende Erfindung betrifft ein Temperaturmanagementsystem für ein in einem Schmiermittelreservoir eines Kompressor-Systems einer von einem Arbeitsmedium durchströmten Wärmepumpe vorliegendes Schmiermittel, umfassend eine Temperaturmesseinheit, die dazu eingerichtet ist, eine Ist-Schmiermittel-Temperatur des Schmiermittels zu messen, eine Kontrolleinheit, die mit der Temperaturmesseinheit signaltechnisch verbunden ist und dazu eingerichtet ist, zu überprüfen, ob die gemessene Ist-Schmiermittel-Temperatur innerhalb eines Soll-Schmiermittel-Temperaturbereichs liegt, sowie ein mit der Kontrolleinheit signaltechnisch verbundenes Temperier-Element, das dazu eingerichtet ist, das Schmiermittel aufzuheizen oder zu kühlen. Ferner betrifft die vorliegende Erfindung eine Wärmepumpe, insbesondere eine Hochtemperaturwärmepumpe, mit einem solchen Temperaturmanagementsystem. Weiterhin betrifft die Erfindung ein Verfahren zum Regeln einer Schmiermittel-Temperatur eines in einem Schmiermittelreservoir eines Kompressor-Systems einer von einem Arbeitsmedium durchströmten Wärmepumpe vorliegenden Schmiermittels.

Die vorliegende Erfindung findet vornehmlich (aber nicht ausschließlich) Verwendung bei thermodynamischen Heizsystemen wie Wärmepumpen, insbesondere bei Hochtemperaturwärmepumpen. Nicht ausgeschlossen ist jedoch eine Implementierung der vorliegenden Erfindung in einem thermodynamischen Kühlsystem, beispielsweise einer Kältemaschine oder Klimaanlage.

Die Technologie von Wärmepumpen ist allgemein bekannt. So werden Wärmepumpen dazu eingesetzt, unter Aufwendung von technischer bzw. mechanischer Arbeit thermische Energie aus einem ersten externen Medium (z.B. der Umgebungsluft oder Flüssigkeiten) aufzunehmen und in Addition mit der aufgewendeten Antriebsenergie als Nutzenergie oder Nutzwärme auf ein zweites externes Medium zu übertragen. Das zweite externe Medium stellt dabei ein zu beheizendes Medium dar. Bei der Implementierung eines solchen Systems in einer Erdwärmeanlage kann das erste externe Medium von im Erdgestein enthaltenen Flüssigkeiten bereitgestellt werden, in Industrieprozessen kann aber auch Abwärme als erstes externes Medium dienen.

Derzeit werden Wärmepumpen insbesondere zum Beheizen von Gebäuden eingesetzt. Jedoch sind derweil auch Anwendungen bekannt geworden, in denen Wärmepumpen zur Erzeugung von für industrielle Prozesse benötigter Wärme genutzt werden. Für industrielle Prozesse werden dabei häufig Hochtemperaturwärmepumpen mit Medientemperaturen von > 100°C eingesetzt.

In der DE 10 2011 086 476 A1 ist das Wärmepumpen-Grundprinzip am Beispiel einer Hochtemperaturwärmepumpe anschaulich beschrieben. Die dortige Wärmepumpe weist einen Fluidkreislauf zum Aufnehmen von thermischer Energie durch das Fluid (Arbeitsmedium) aus wenigstens einem ersten Reservoir unter Aufwendung von technischer Arbeit und zur Abgabe von thermischer Energie durch das Fluid an wenigstens ein zweites Reservoir zum Heizen des wenigstens einen zweiten Reservoirs auf.

Nebst einer Verdampfungseinheit, einer Kondensationseinheit, und einer Expansionseinheit, weisen Wärmepumpen (auch Hochtemperaturwärmepumpen) standardmäßig einen Verdichter zur Kompression eines in einem Fluidkreislauf zirkulierenden Arbeitsmediums auf. In der Verdampfungseinheit wird vom flüssigen in den gasförmigen Zustand befördertes Arbeitsmedium vom Kompressor angesaugt und auf ein Druckniveau komprimiert, das zur Verflüssigung des Arbeitsmediums erforderlich ist. Während der (beispielsweise elektrisch) angetriebene Verdichter das dampfförmige Arbeitsmedium von einem niedrigen Ausgangsdruckniveau zu einem höheren Enddruckniveau verdichtet, erhöht sich die Temperatur des Arbeitsmediums. Aus dem Stand der Technik sind unterschiedliche Verdichter-Varianten bekannt, beispielsweise Hubkolbenverdichter, Scroll-Verdichter, Schraubenverdichter, Rollkolbenverdichter und Drehkolbenverdichter (diese Auflistung ist nicht abschließend). Hubkolbenverdichter beispielsweise basieren auf dem Prinzip, dass ein sich sich bewegender Kolben das gasförmige Arbeitsmedium durch ein Ansaugventil ansaugt, wenn sich der Kolben in einen den Kolben umgebendem Zylinder abwärts bewegt. Das Arbeitsmedium wird verdichtet, wenn der Kolben eine Aufwärtsbewegung erfährt. Bei Hubkolbenverdichtern ist das Ansaugventil während der Kompression des Arbeitsmediums geschlossen. Das Arbeitsmedium verlässt den Verdichter über ein Druckventil, sofern der Druck im Zylinder ein auf einer Hochdruckseite des Verdichters vorliegendes Druckniveau überschreitet. Da nicht erfindungserheblich sei auf Ausführungen zu weiteren Verdichter-Typen an dieser Stelle verzichtet. Der "Verdichter" kann synonym als "Kompressor" bezeichnet werden. Nachfolgend sei der Begriff des "Kompressor-Systems" durchgängig verwendet, da der eigentliche Kompressor in der Regel mit weiteren Komponenten, wie einer den Kompressor antreibenden Antriebseinheit (z.B. einem Elektromotor) und einem Schmiermittelreservoir unmittelbar zusammenwirkt.

Die Erfindung kann sich auf unterschiedliche Bauformen von Kompressor-Systemen beziehen, unter anderem auf ein offenes Kompressor-System, ein halbhermetisches Kompressor-System oder ein hermetisches Kompressor-System. Bei offenen Kompressor-Systemen ist die Antriebseinheit (der Motor) baulich vom Kompressor getrennt. Dabei wird eine Antriebswelle des Kompressors aus dem Gehäuse geführt und mit der Antriebseinheit wirkverbunden. In halbhermetischen Kompressor-Systemen sind die Antriebseinheit und der Kompressor in einem gemeinsamen Gehäuse angeordnet. Bei einem hermetischen Kompressor-System sind Antriebseinheit und Kompressor ebenfalls in einem gemeinsamen Gehäuse angeordnet, jedoch ist dieses im Gegensatz zu einem halbhermetischen Kompressor-System vollends nach außen verschweißt.

In der Regel weisen die erwähnten Kompressoren bzw. Kompressor-Systeme ein Schmiermittelreservoir zur Aufnahme eines Schmiermittels auf. Unter einem Schmiermittel kann auch ein Schmiermittelgemisch verstanden werden. Das Schmiermittel dient dazu, Komponenten des Kompressors bzw. Kompressor-Systems zu schmieren, insbesondere die beweglichen Komponenten des Kompressors (z.B. Kolben, Zylinder, Lager, Ventile etc.). Bekannte Schmiermittelreservoirs werden dabei häufig als "Ölsumpf" bezeichnet. Da es sich jedoch auch um anderweitige Schmiermittel als "Öl" handeln kann, sei vorliegend durchgängig der Begriff des "Schmiermittelreservoirs" verwendet. Aus dem Ölsumpf bzw. Schmiermittelreservoir wird das Öl bzw. Schmiermittel angesaugt und zu den jeweils zu schmierenden Stellen befördert.

Es ist bekannt, dass sich im Stillstand einer Wärmepumpe im Ölsumpf (Schmiermittelreservoir) des Kompressors flüssiges Arbeitsmedium (z.B. Kältemittel) ansammeln und mit dem Öl bzw. Schmiermittel vermischen bzw. gasförmiges Arbeitsmedium in diesem lösen kann. Dadurch kann die Viskosität des Öls bzw. Schmiermittels herabgesetzt werden, und die Schmierwirkung abnehmen. Auch andere Schmiereigenschaften des Schmiermittels können durch in dem Schmiermittel gelöstes Arbeitsmedium bzw. damit vermischtes Arbeitsmittel negativ beeinflusst werden. Wird anstelle des Schmiermittels ein Gemisch aus Schmiermittel und Arbeitsmedium zu den zu schmierenden Stellen befördert, kann dies zu einer verminderten Schmierwirkung führen. Letztlich kann daraus eine erhöhte Reibung zwischen den beweglichen Komponenten bzw. in den Lagern resultieren, was zu einem vermehrten mechanischen Verschleiß führen kann. Um dem entgegenzuwirken, wird heutzutage auf Öl- bzw. Schmiermittelheizungen zurückgegriffen, womit sich das Schmiermittel bei Stillstand der Wärmepumpe beheizen lässt. Bekannt ist es dabei, derartige Heizsysteme in Form von in dem Ölsumpf bzw. Schmiermittelreservoir angeordneten elektrischen Heizstäben zu verwirklichen. Auch sind Heizsysteme in Form von elektrischen Heizbändern bekannt, die den Ölsumpf bzw. das Schmiermittelreservoir umgeben.

Vor der Inbetriebnahme bzw. dem Starten einer Wärmepumpe muss also sichergestellt werden, dass ein Großteil von in dem Schmiermittel untermischtem oder gelöstem Arbeitsmedium aus dem Schmiermittel ausgetrieben wird. Dazu wird das Schmiermittel aufgeheizt.

Während des Betriebs der Wärmepumpe ist zu gewährleisten, dass das Schmiermittel eine optimale Viskosität aufweist, um eine bestmögliche Schmierwirkung zu erbringen. Die Viskosität des Schmiermittels hängt dabei - wie erwähnt - einerseits vom Anteil des in dem Schmiermittel gelösten bzw. verteilten Arbeitsmedium (z.B. Kältemittel) ab, andererseits aber auch von der Temperatur des Schmiermittels. Die Löslichkeit des Arbeitsmediums in dem Schmiermittel wird von der Temperatur des Schmiermittels und dem Druck des im Kompressor-System (insbesondere im Schmiermittelreservoir) gasförmig vorliegenden Arbeitsmedium bestimmt. Früher verwendete Arbeitsmedien (z.B. Fluorkohlenwasserstoffe wie R134a) weisen eine relativ geringe Löslichkeit in Schmiermitteln auf, moderne Arbeitsmedien (Hydrofluorolefine) hingegen weisen demgegenüber häufig eine deutlich höhere Löslichkeit in Schmiermitteln auf. Folglich ist es zum Betrieb eines Kompressor-Systems einer Wärmepumpe wesentlich, das Schmiermittel auf einem Temperaturniveau zu halten, das oberhalb einer Kondensationstemperatur des Arbeitsmediums (bei einem bestimmten Druck des Arbeitsmediums) liegt. Gleichzeitig ist es für eine möglichst lange Haltbarkeit bzw. Lebensdauer des Schmiermittels erforderlich, die Schmiermittel-Temperatur so gering wie möglich zu halten. Entsprechend besteht ein erhöhter Bedarf an einer flexiblen, dynamischen und situationsadäquaten Temperatureinstellung eines in einem Kompressor-System einer Wärmepumpe verwendeten Schmiermittels.

Zum Stand der Technik sei ergänzend auf die US 5 318 151 A, die WO 2015/044613 A1, die US 2009/087320 A1, die US 2012/090340 A1 und die US 2013/152882 A1 verwiesen. Ebenso sei das Dokument WO2019074108 erwähnt, welches eine Druck- und Temperaturmessung im Schmiermittelreservoir vorschlägt. Entsprechend liegt der vorliegenden Erfindung die Aufgabe zugrunde, ein Temperaturmanagementsystem für ein in einem Schmiermittelreservoir eines Kompressor-Systems einer von einem Arbeitsmedium durchströmten Wärmepumpe vorliegendes Schmiermittel bereitzustellen, welches eine flexible, dynamische und bedarfsangepasste Temperatureinstellung des Schmiermittels zur Erhöhung der Schmiermittel-Lebensdauer einerseits und der Betriebs-Performance der Wärmepumpe andererseits ermöglicht. Die gleiche Aufgabenstellung liegt der mit der Erfindung vorgeschlagenen Wärmepumpe sowie dem mit der Erfindung vorgeschlagenen Verfahren zum Regeln einer Schmiermittel-Temperatur zugrunde.

Zur Lösung dieser Aufgabe wird ein Temperaturmanagementsystem mit den Merkmalen des Anspruchs 1, eine Wärmepumpe mit den Merkmalen des Anspruchs 6 sowie Verfahren mit den Merkmalen des Anspruchs 7 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die vorliegende Erfindung betrifft ein Temperaturmanagementsystem nach dem Merkmalen des Anspruchs 1.

Bei der genannten Wärmepumpe, in welcher ein erfindungsgemäßes Temperaturmanagementsystem zum Einsatz kommt, handelt es sich vorzugsweise um eine Hochtemperaturwärmepumpe. Besondere Vorteile zeigt das mit der Erfindung vorgeschlagene Temperaturmanagementsystem bei Hochtemperaturwärmepumpen mit Temperaturen des wärmeaufnehmenden externen Mediums von > 100°C. Das genannte Kompressor-System kann einen oder mehrere Kompressor(en) der eingangs beschriebenen Art aufweisen, insbesondere eignet sich die Erfindung aber für Kompressor-Systeme, die auf einem oder mehreren Hubkolben-Verdichter(n) basieren. Bei Implementierung einer Mehrzahl von Hubkolben-Verdichtern in dem Kompressor-System, also einer Anordnung von Hubkolben-Verdichtern, können die Hubkolben-Verdichter aus einem gemeinsamen Schmiermittelreservoir oder aus separaten Schmiermittelreservoirs mit Schmiermittel versorgt werden. Unter einem "Schmiermittelreservoir" kann also ein einzelnes Schmiermittelreservoir wie auch eine Mehrzahl von Schmiermittelreservoirs verstanden werden. Unter einem Schmiermittelreservoir kann - wie eingangs erwähnt - auch ein Ölsumpf oder eine Ölwanne subsumiert werden, wobei es sich bei dem verwendeten Schmiermittel nicht zwingend um ein Öl handeln muss. Das Kompressor-System bzw. der Kompressor kann ein Kurbel-Gehäuse (Kolben, Pleuel und Kurbelwelle) umfassen (also ein solches aufweisen), ferner auch weitere Komponenten wie einen Zylinderkopf (Gasführung und Ventilsystem) sowie das genannte Schmiermittelreservoir.

Das Temperaturmanagementsystem umfasst eine Temperaturmesseinheit, die dazu eingerichtet ist, eine Ist-Schmiermittel-Temperatur des in dem Schmiermittelreservoirs vorliegenden Schmiermittels zu messen. Sofern eine Mehrzahl von separaten Schmiermittelreservoirs vorgesehen ist, kann jedem der Schmiermittelreservoirs eine separate Temperaturmesseinheit zugeordnet sein, um eine jeweilige Ist-Schmiermittel-Temperatur der in den einzelnen Reservoirs vorliegenden Schmiermittel zu messen.

Eine "Temperaturmesseinheit" ist eine Einheit, die zur Messung einer zu einem bestimmten Zeitpunkt vorliegenden Stofftemperatur des Schmiermittels geeignet ist. Gegebenenfalls kann eine erfindungsgemäß eingesetzte Temperaturmesseinheit auch die Umgebungstemperatur in Nähe zum Schmiermittel messen und daraus die Ist-Schmiermittel-Temperatur ableiten bzw. berechnen.

Die Temperaturmesseinheit kann eine Messsonde umfassen, die in unmittelbarem Kontakt mit dem Schmiermittel steht und die Ist-Schmiermittel-Temperatur im Wege einer Kontaktmessung misst. Eine solche Messsonde kann als Kontaktthermometer bezeichnet werden, welche einen Wärmekontakt zum Messobjekt (dem Schmiermittel oder einem zu messendem Umgebungsmedium) erfordern. Als beispielhafte Kontaktthermometer, die erfindungsgemäß zum Einsatz kommen können seien Ausdehnungsthermometer, Dampfdruckthermometer, Thermoelemente, Widerstandsthermometer, Temperatursensoren (integrierte Schaltkreise mit Temperaturausgabe), Folienthermometer, Temperaturmesssteifen, Flüssigkeitskristall-Thermometer und Gasthermometer genannt.

Gleichsam kann die Temperaturmesseinheit aber eine Messsonde umfassen, die kontaktlos (d.h. ohne unmittelbaren Stoffkontakt mit dem Messobjekt) die Ist-Schmiermittel-Temperatur des Schmiermittels misst. Solche Messsonden können als berührungslose Thermometer bezeichnet werden. Diese können die Temperaturstrahlung des Schmiermittels mittels Infrarotsensoren umfassen.

Die Temperaturmesseinheit ist - wie erwähnt - signaltechnisch mit einer Kontrolleinheit verbunden. Unter einer "signaltechnischen Verbindung" ist zu verstehen, dass ein uni- oder bidirektionaler Datentransfer erfolgen kann. Von der Temperaturmesseinheit gemessene Ist-Schmiermittel-Temperaturen oder dazu korrespondierte Daten können somit an die Kontrolleinheit weitergeleitet werden. Die Temperaturmesseinheit kann dabei eine Datenprozessierung, beispielsweise im Sinne einer Vorprozessierung, vornehmen und Rohdaten in ein gewünschtes Datenformat umwandeln. Ohne Weiteres kann dies aber auch in der Kontrolleinheit vorgenommen oder ergänzt werden. Eine "signaltechnische Verbindung" kann kabelgebunden oder kabellos (drahtlos) erfolgen. Als kabellose Verbindungen können insbesondere elektromagnetische Übertragungen verstanden werden, beispielsweise Funkverbindungen, Bluetooth Verbindungen oder WLAN Verbindungen. Gleichsam sind auch optische Datenübertragungsmöglichkeiten als kabellose signaltechnische Verbindung anzusehen. Die Kontrolleinheit kann Bestandteil in einem Gehäuse des Kompressor-Systems, in Nähe des Kompressor-Systems (beispielsweise in einem Gehäuse einer Steuereinheit der Wärmepumpe) oder extern angeordnet sein. Auch kann die Kontrolleinheit eine externe Recheneinheit, ein Server, ein Cloudserver oder ähnliches sein.

Die Kontrolleinheit ist - wie erwähnt - dazu eingerichtet, zu überprüfen, ob die gemessene Ist-Schmiermittel-Temperatur innerhalb eines Soll-Schmiermittel-Temperaturbereichs liegt. Dazu kann die Kontrolleinheit dazu eingerichtet sein, einen rechnerischen oder algorithmischen Datenabgleich zwischen der Ist-Schmiermittel-Temperatur und einem Soll-Schmiermittel-Temperaturbereich vorzunehmen. Die Kontrolleinheit kann eine Datenbank mit hinterlegten Soll-Schmiermittel-Temperaturbereichsdaten enthalten, die beispielsweise aus Erfahrungswerten, Maschinenwerten oder anderweitig ermittelt worden sind. Eine solche Datenbank kann auch extern zur Kontrolleinheit angeordnet sein, sodass die Kontrolleinheit über eine geeignete Signal- und Datenverbindung auf die dort abgelegten Daten zugreifen kann. Gleichsam kann die Kontrolleinheit Mittel aufweisen, vermöge dessen der Soll-Schmiermittel-Temperaturbereich in Abhängigkeit eines bestimmten Parameters (z.B. eines in dem Schmiermittelreservoir vorliegenden Drucks) dynamisch angepasst werden und dem Vergleich mit der Ist-Schmiermittel-Temperatur zugrunde gelegt werden kann. Zur Ausführung der vorgenannten Vorgänge kann die Kontrolleinheit eine Recheneinheit bzw. eine Datenverarbeitungseinheit aufweisen. Die Kontrolleinheit kann eine Mehrzahl von Signalverbindungsschnittstellen aufweisen, über welche diese signaltechnisch z.B. mit der Temperaturmesseinheit, Temperier-Einheit und ggf. weiteren Komponenten verbindbar ist.

Wie erwähnt, umfasst das Temperaturmanagement-System ein mit der Kontrolleinheit signaltechnisch verbundenes Temperier-Element, das dazu eingerichtet ist, das Schmiermittel aufzuheizen oder zu kühlen. Das Temperier-Element kann beispielsweise in Form einer von einem Heiz- oder Kühlmedium (z.B. Wasser) durchströmbaren Hohlkammer oder eines Kanals gebildet sein, welcher in ein Verkleidungselement wie z.B. eine Gehäusewand oder einen Gehäuseboden des Schmiermittelreservoirs integriert oder an diesem angeordnet ist. Auch kann unter einem Temperier-Element eine Mehrzahl von Kanälen (also ein Kanalsystem) oder eine Mehrzahl von Hohlkammern (also ein Hohlkammersystem) zu verstehen sein, die miteinander in einer Strömungsverbindung stehen. Auch eine separate Durchströmung der Mehrzahl von Kanälen oder Hohlkammern ist möglich.

Entsprechend kann die Kontrolleinheit mit einer Mehrzahl von Temperierelementen signaltechnisch verbunden sein. Die Temperier-Elemente umfassen in der Regel eine Steuer- und/oder Regeleinheit, über welche die Zuleitung des Heizoder Kühlmediums in geeigneter Temperatur gesteuert bzw. geregelt wird. Dazu kann die Steuer- und/oder Regeleinheit mit geeigneten Zu- und Abführeinheiten (z.B. Pumpen) zusammenwirken, die den Zulauf bzw. Ablauf des Heiz- oder Kühlmediums bewirken können und eine erforderliche Heiz- oder Kühltemperatur bereitgestellt wird. Dabei kann das Heiz- oder Kühlmedium aus externer Quelle der Wärmepumpe stammen, gleichsam aber auch ein Wärmeenergie an die Wärmepumpe abgebendes oder Wärme von der Wärmepumpe aufnehmendes Medium sein, welche der Temperier-Einheit oder der Mehrzahl von Temperier-Einheiten zugeführt werden. Vorstellbar ist zudem, dass eine das Heiz- oder Kühlmedium vermischende Mischeinheit vorgesehen ist, die zur Bereitstellung einer gewünschten Temperatur des Heiz- oder Kühlmediums verschieden temperierte Medien vermischt. Die Kontrolleinheit kann insbesondere mit der Steuer- und/oder Regeleinheit des Temperier-Elements signaltechnisch verbunden sein.

Wird in der Kontrolleinheit durch den Abgleich der Ist-Schmiermittel-Temperatur mit dem Soll-Schmiermittel-Temperaturbereich festgestellt, dass die Ist-Schmiermittel-Temperatur oberhalb des Soll-Schmiermittel-Temperaturbereichs liegt (also eine höhere, d.h. wärmere, Temperatur aufweist), veranlasst die Kontrolleinheit das Temperier-Element zum Kühlen des Schmiermittels. Hierzu kann die Kontrolleinheit zunächst ein Feststellungssignal (bezogen auf die oberhalb des Soll-Schmiermittel-Temperaturbereichs liegende Ist-SchmiermittelTemperatur) erzeugen, welches in ein Befehlssignal umgewandelt wird, das nach Weitergabe an das Temperier-Element oder eine dem Temperier-Element zugeordnete Steuer- und/oder Regeleinheit eine Kühlung des Schmiermittels durch Durchströmen des Temperier-Elements mit einem Kühlmedium von geeigneter Temperatur bewirkt. Die in dem Temperier-Element (z.B. dem Kühlmedium) einzustellende Temperatur, die erforderlich ist, um das Schmiermittel soweit herunter zu kühlen, sodass die Ist-SchmiermittelTemperatur wieder innerhalb des Soll-Schmiermittel-Temperaturbereichs liegt, kann von jener dem Temperier-Element zugeordneten Steuer- und/oder Regelungseinheit, der Kontrolleinheit oder unter Zusammenwirkung beider Einheiten ermittelt werden.

Wird in der Kontrolleinheit durch den Abgleich der Ist-Schmiermittel-Temperatur mit dem Soll-Schmiermittel-Temperaturbereich festgestellt, dass die Ist-Schmiermittel-Temperatur unterhalb des Soll-Schmiermittel-Temperaturbereichs liegt (also eine niedrigere, d.h. kältere, Temperatur aufweist), veranlasst die Kontrolleinheit das Temperier-Element zum Heizen des Schmiermittels. Hierzu kann die Kontrolleinheit zunächst ein Feststellungssignal (bezogen auf die unterhalb des Soll-Schmiermittel-Temperaturbereichs liegende Ist-SchmiermittelTemperatur) erzeugen, welches in ein Befehlssignal umgewandelt wird, das nach Weitergabe an das Temperier-Element oder eine dem Temperier-Element zugeordnete Steuer- und/oder Regeleinheit ein Aufheizen des Schmiermittels durch Durchströmen des Temperier-Elements mit einem Heizmedium von geeigneter Temperatur bewirkt. Die in dem Temperier-Element (z.B. in dem Heizmedium) einzustellende Temperatur, die erforderlich ist, um das Schmiermittel soweit aufzuheizen, sodass die Ist-Schmiermittel-Temperatur wieder innerhalb des Soll-Schmiermittel-Temperaturbereichs liegt, kann von jener dem Temperier-Element zugeordneten Steuer- und/oder Regelungseinheit, der Kontrolleinheit oder unter Zusammenwirkung beider Einheiten ermittelt werden.

Mit einem erfindungsgemäßen Temperaturmanagementsystem lässt sich die Schmiermittel-Temperatur flexibel und dynamisch einstellen. Das System ermöglicht zu einem aktuellen Zeitpunkt eine Temperaturkontrolle des Schmiermittels und erlaubt - sofern erforderlich - eine Anpassung der Schmiermittel-Temperatur. Das Temperaturmanagementsystem eignet sich zum Einsatz im kontinuierlichen, d.h. andauernden Betrieb, was bedeutet, dass die Schmiermittel-Temperatur kontinuierlich überprüft und angepasst wird. Auch kann dies in festgelegten Zeitintervallen erfolgen, alternativ oder zusätzlich auch zu einem nutzerseitig vorgegebenen (d.h. gewünschten) Zeitpunkt.

Weitere vorteilhafte Ausgestaltungen eines erfindungsgemäßen Temperaturmanagementsystems ergeben sich aus den in den Unteransprüchen angegebenen und den nachfolgend beschriebenen Merkmalen. Auch auf die in den Unteransprüchen aufgeführten Merkmale seien nachfolgend Bezug genommen.

Nach einer ersten Ausgestaltung eines mit der Erfindung vorgeschlagenen Temperaturmanagementsystems kann dieses eine mit der Kontrolleinheit signaltechnisch verbundene Druckmesseinheit umfassen, die dazu eingerichtet ist, einen in dem Schmiermittelreservoir vorliegenden Druck zu messen. Unter einem "Druck" kann auch der Dampfdruck des Arbeitsmediums verstanden werden, welches zumindest teilweise in dem Schmiermittel gelöst vorliegen kann. In der Praxis kann der Druck in einem mit dem Schmiermittelreservoirs verbundenen Gehäuseteil des Kompressor-Systems, beispielsweise in dem Kurbelgehäuse, gemessen werden. Dieser Druck entspricht dem Gasdruck (des Arbeitsmediums) oberhalb des flüssigen Schmiermittels im Schmiermittelreservoir. Das Kurbelgehäuse und das Schmiermittelreservoirs können dabei mit der Niederdruckseite der Wärmepumpe (Verdampfer, Kompressor-Gaseintritt) verbunden sein. Der Druck muss also nicht unmittelbar im Bereich einer Schmiermitteloberfläche in dem Schmiermittelreservoirs gemessen werden, sondern es kann unproblematisch auch ein dazu proportionaler Druck an einer anderen Stelle des Kompressor-Systems abgegriffen bzw. gemessen werden.

Der Druck kann kontinuierlich, in festgelegten Zeitintervallen oder zu gewünschten Zeitpunkten gemessen werden. Die gemessenen Druckwerte werden an die Kontrolleinheit weitergeleitet. In der Druckmesseinheit kann bereits eine Vorprozessierung der gemessenen Druckwerte erfolgen, beispielsweise die Bereitstellung der Druckwerte in einem zur Weiterverarbeitung geeigneten Datenformat. Auch kann in der Kontrolleinheit eine Prozessierung der erfassten oder vorprozessierten Druckwerte erfolgen. Die signaltechnische Verbindung zwischen Druckmesseinheit und Kontrolleinheit kann kabelgebunden oder kabellos ausgestaltet sein. Die Druckmesseinheit kann einen einzigen Drucksensor umfassen, jedoch auch eine Anordnung aus mehreren Drucksensoren. Bei Vorsehen mehrerer Drucksensoren, können sämtliche der Drucksensoren signaltechnisch mit der Kontrolleinheit verbunden sein. Auch kann vorgesehen sein, dass die Drucksensoren signaltechnisch mit einem gemeinsamen Mikrocontroller verbunden sind und die dort gesammelten Druckwertdaten gemeinsam von dem Mikrocontroller an die damit signaltechnisch verbundene Kontrolleinheit weitergegeben werden. In dem Mikrocontroller oder der Kontrolleinheit kann aus den Druckwerten der einzelnen Drucksensoren ein gemittelter Druckwert als Druck des Schmiermittelreservoirs (proportional oder entsprechend dem Gasdruck des Arbeitsmediums) berechnet werden.

Nach einer weiteren Ausgestaltung eines mit der Erfindung vorgeschlagenen Temperaturmanagementsystems kann vorgesehen sein, dass der Soll-Schmiermittel-Temperaturbereich eine untere Temperaturgrenze aufweist, die einer Kondensationstemperatur des Arbeitsmediums bezogen auf einen in dem Schmiermittelreservoir vorliegenden Druck entspricht. Als Kondensationstemperatur wird jene Temperatur bezeichnet, ab der ein Stoff (hier das Arbeitsmedium) bei einem gegebenen Druck kondensiert, das heißt vom gasförmigen in den flüssigen Aggregatzustand übergeht. Der in dem Schmiermittelreservoir vorliegende Druck wird dabei mit der genannten Druckmesseinheit gemessen und zur Berechnung der unteren Temperaturgrenze herangezogen. Ferner können zur Berechnung weitere Kennwerte herangezogen werden, beispielsweise Schmiermittel-spezifische Daten oder Arbeitsmediumsspezifische Daten, die in der Kontrolleinheit oder einer Datenbank abgelegt sind. Der Soll-Schmiermittel-Temperaturbereich wird also zumindest teilweise von den konkret im Schmiermittelreservoir oder dem Kompressor-System (z.B. dem Kurbelgehäuse) vorherrschenden Bedingungen abgeleitet, weshalb die Temperaturkontrolle und ggf. Anpassung mittels des Temperaturmanagementsystems stets situationsadäquat erfolgt.

Nach einer weiteren Ausgestaltung eines mit der Erfindung vorgeschlagenen Temperaturmanagementsystems kann vorgesehen sein, dass der Soll-Schmiermittel-Temperaturbereich eine obere Temperaturgrenze aufweist, die 2 K - 15 K, vorzugsweise 5 K - 10 K, oberhalb der Kondensationstemperatur des Arbeitsmediums liegt. Der durch die genannte untere Temperaturgrenze und obere Temperaturgrenze festgelegte Soll-Schmiermittel-Temperaturbereich basiert auf vornehmlich auf Erfahrungswerten, sodass bei einer innerhalb dieses Soll-Schmiermittel-Temperaturbereichs liegenden Ist-Schmiermittel-Temperatur ein zuverlässiger Betrieb des Kompressor-Systems der Wärmepumpe gewährleistet ist. Dies gilt sowohl für das Anfahren, d.h. Starten des Systems, wie auch für den Betrieb als solchen, in welchem eine ausreichende Schmierung der Kompressor-Komponenten gewährleistet sein muss.

Nach einer weiteren Ausgestaltung eines mit der Erfindung vorgeschlagenen Temperaturmanagementsystems kann vorgesehen sein, dass die Kontrolleinheit dazu eingerichtet ist, die untere Temperaturgrenze zu einem vorgegebenen Zeitpunkt zu ermitteln, nämlich unter Berücksichtigung des in dem Schmiermittelreservoir zu dem vorgegebenen Zeitpunkt gemessenen Drucks. Die Berechnung kann unter Einsatz einer auf der Kontrolleinheit ausgeführten Software, einer Rechenroutine oder eines Algorithmus erfolgen. Ferner kann vorgesehen sein, dass die Kontrolleinheit dazu eingerichtet ist, den Soll-Schmiermittel-Temperaturbereich dynamisch anzupassen, nämlich unter Berücksichtigung der ermittelten unteren Temperaturgrenze sowie einer oberen Temperaturgrenze, die 2 K - 15 K, vorzugsweise 5 K - 10 K, oberhalb der Kondensationstemperatur des Arbeitsmediums liegt. Unter einer dynamischen Anpassung ist zu verstehen, dass der der Soll-Schmiermittel-Temperaturbereich an die zu einem gegebenen Zeitpunkt konkret in dem Schmiermittelreservoir bzw. in dem Kompressor-System vorherrschenden Bedingungen angepasst wird. Somit wird auch der Anteil von in dem Schmiermittel gelösten oder mit diesem vermischten Arbeitsmedium (z.B. Kühlmittel) berücksichtigt, denn dies wirkt sich unmittelbar auf die Kondensationstemperatur des Arbeitsmediums und ggf. den vorherrschenden Druck im Schmiermittelreservoir aus. Die Kontrolleinheit ist vorzugsweise dazu eingerichtet, die Ist-Schmiermittel-Temperatur derart zu regeln, dass diese stets innerhalb des Soll-Schmiermittel-Temperaturbereichs liegt, sodass stets eine ausreichende Schmierung der Kompressor-Komponenten während des Betriebs des Kompressor-Systems bzw. der Wärmepumpe sichergestellt ist.

Wie eingangs erwähnt, wird die der Erfindung zugrunde liegende Aufgabe auch mit einer Wärmepumpe, insbesondere einer Hochtemperaturwärmepumpe, gelöst, die ein erfindungsgemäß ausgebildetes Temperaturmanagementsystem umfasst. Bei Verwendung in Hochtemperaturwärmepumpen ist es für eine zuverlässige Performance besonders relevant, dass beim Anfahren der Hochtemperaturwärmepumpe möglichst wenig gasförmiges Arbeitsmedium in dem Schmiermittel des Kompressor-Systems gelöst ist. Ferner zeigt sich auch beim Betrieb von Hochtemperaturwärmepumpen die enorme Relevanz einer zuverlässigen Schmierung der Kompressor-Komponenten. Diese Anforderungen werden durch eine Implementierung eines erfindungsgemäßen Temperaturmanagementsystems in einer Hochtemperaturwärmepumpe gewährleistet.

Wie weiterhin eingangs erwähnt, wird die der Erfindung zugrunde liegende Aufgabe auch mit einem Verfahren zum Regeln einer Schmiermittel-Temperatur eines in einem Schmiermittelreservoir eines Kompressor-Systems einer von einem Arbeitsmedium durchströmten Wärmepumpe vorliegenden Schmiermittels gelöst. Das Verfahren umfasst die folgenden Schritte:
a. Messen eines in dem Schmiermittelreservoir vorliegenden Drucks;
b. Ermitteln einer Kondensationstemperatur des Arbeitsmediums auf Basis des im Schritt a. gemessenen Drucks;
c. Festlegen eines Soll-Schmiermittel-Temperaturbereichs, wobei dessen untere Temperaturgrenze die im Schritt b. ermittelte Kondensationstemperatur ist, und wobei dessen obere Temperaturgrenze 2 K - 15 K, vorzugsweise 5 K - 10 K, oberhalb der Kondensationstemperatur des Arbeitsmediums liegt;
d. Messen einer Ist-Schmiermittel-Temperatur des in dem Schmiermittelreservoir liegenden Schmiermittels;
e. Vergleichen der Ist-Schmiermittel-Temperatur mit dem Soll-Schmiermittel-Temperaturbereich, und sodann
   - Kühlen des Schmiermittels, sofern die Ist-Schmiermittel-Temperatur oberhalb des Soll-Schmiermittel-Temperaturbereichs liegt, oder
   - Aufheizen des Schmiermittels, sofern die Ist-Schmiermittel-Temperatur unterhalb des Soll-Schmiermittel-Temperaturbereichs liegt.

Es sei betont, dass der gemessene Druck dem Kondensationsdruck des Arbeitsmediums (z.B. Kältemittels) in dem Schmiermittelreservoir bzw. dem Kompressor-System (z.B. einem mit dem Schmiermittelreservoir verbundenen Kurbelgehäuse oder einer anderen Komponente) entspricht. Der Kondensationsdruck kann sich dabei auf die Niederdruckseite des Kompressor-Systems (Verdampfer, Kompressor-Gaseintritt) beziehen, denn mit dieser kann das Schmiermittelreservoir und das Kurbelgehäuse unmittelbar verbunden sein. Der in dem Schmiermittelreservoir oder einem damit verbundenen Kurbelgehäuse (oder einer anderweitigen Komponente des Kompressor-Systems) vorliegende (messtechnisch) erfassbare Druck entspricht oder korrespondiert zu dem Kondensationsdruck des Arbeitsmediums. Auf Basis des Kondensationsdrucks lässt sich die Kondensationstemperatur des Arbeitsmediums berechnen. Hierzu können jedoch auch noch weitere Parameter, Messwerte, empirische Daten etc. einbezogen werden. Die Kondensationstemperatur kann sich aber auch unmittelbar aus dem Kondensationsdruck berechnen lassen (gegebenenfalls unter Berücksichtigung Arbeitsmediums-spezifischer Kenndaten oder der Geometrie bzw. dem Volumen des Schmiermittelreservoirs/Kurbelgehäuses oder einem dort vorliegenden - mit Gas gefüllten - Raum).

Ein erfindungsgemäßes Verfahren kann kontinuierlich oder in einem vorgegebenen Zeitintervall ausgeführt werden. Es ist also auch eine halbkontinuierliche oder diskontinuierliche Verfahrensführung möglich. Das Verfahren kann bedarfsgerecht ausgeführt werden, insbesondere kann vorgesehen sein, dass das Verfahren automatisiert, halbautomatisiert oder manuell ausgeführt wird.

Ferner kann bei einem erfindungsgemäßen Verfahren vorgesehen sein, dass die Ist-Schmiermittel-Temperatur derart geregelt wird, dass diese stets innerhalb des Soll-Schmiermittel-Temperaturbereichs liegt. Damit wird eine stabile Schmiermitteltemperatur während des Betriebs einer Wärmepumpe bzw. des zugehörigen Kompressor-Systems gewährleistet. Entsprechend wird damit stets eine ausreichende Schmierung der Kompressor-Komponenten während des Betriebs des Kompressor-Systems bzw. der Wärmepumpe sichergestellt.

Weitere Merkmale und Vorteile der Erfindung ergeben sich aus der folgenden Beschreibung eines nicht einschränkend zu verstehenden Ausführungsbeispiels der Erfindung, welches im Folgenden unter Bezugnahme auf die Zeichnungen näher erläutert wird. In dieser Zeichnung zeigen schematisch:
- Fig. 1: den grundsätzlichen Aufbau eines Temperaturmanagementsystems nach der Erfindung;
- Fig. 2: den Verfahrensablauf eines mit der Erfindung vorgeschlagenen Verfahrens.

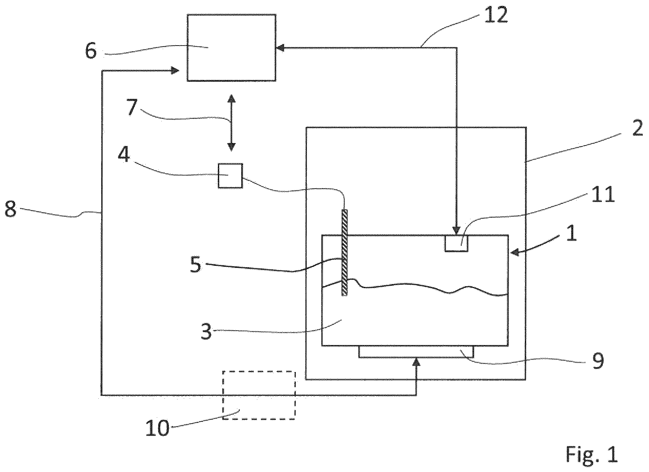

Die Figur 1 zeigt schematisch den grundsätzlichen Aufbau eines erfindungsgemäßen Temperaturmanagementsystems für ein in einem Schmiermittelreservoir 1 eines Kompressor-Systems 2 einer Wärmepumpe vorliegendes Schmiermittel 3. Das Temperaturmanagementsystem umfasst eine Temperaturmesseinheit 4, die dazu eingerichtet ist, eine Ist-SchmiermittelTemperatur des Schmiermittels 3 zu messen. Die in der Figur 1 dargestellte Temperaturmesseinheit 4 ist über ein Kontaktthermometer 5 im Kontakt mit dem Schmiermittel 3. Gleichwohl kann die Temperaturmesseinheit 4 auch kontaktlos ausgebildet sein. Die Temperaturmesseinheit 4 ist dabei in das Kompressor-System 2 bzw. ein zugehöriges Gehäuse integriert (nicht dargestellt).

Ferner umfasst das Temperaturmanagementsystem eine Kontrolleinheit 6, die mit der Temperaturmesseinheit 4 signaltechnisch verbunden ist, beispielsweise über eine kabelgebundene oder kabellose Signalverbindung 7. Über die Signalverbindung 7 erfolgt ein Datenaustausch zwischen Temperaturmesseinheit 4 und der Kontrolleinheit 6. Ferner erfolgt ein Signalaustausch zur Verwirklichung von Steuer- und Regelbefehlen über die Signalverbindung 7. Die Kontrolleinheit 6 ist dazu eingerichtet ist, zu überprüfen, ob die gemessene Ist-SchmiermittelTemperatur innerhalb eines Soll-Schmiermittel-Temperaturbereichs liegt.

Weiterhin umfasst das Temperaturmanagementsystem ein mit der Kontrolleinheit 6 signaltechnisch (d.h. über eine kabelgebundene oder kabellose Signalverbindung 8) verbundenes Temperier-Element 9, das dazu eingerichtet ist, das Schmiermittel 3 aufzuheizen oder zu kühlen. Das Temperier-Element 9 ist vorliegend auf der Unterseite des Schmiermittelreservoirs 1 stark schematisiert dargestellt. Beispielweise kann das Temperier-Element 9 ein von einem Heizmedium- oder Kühlmedium durchströmbarer Hohlraum oder Kanal sein, der in eine das Schmiermittelreservoir 1 umgebende Verkleidung oder ein Gehäuse des Schmiermittelreservoirs 1 integriert ist.

Die Kontrolleinheit 6 ist dazu eingerichtet, das Temperier-Element 9 zum Kühlen des Schmiermittels 3 zu veranlassen, sofern die Ist-Schmiermittel-Temperatur oberhalb des Soll-Schmiermittel-Temperaturbereichs liegt. Liegt die Ist-Schmiermittel-Temperatur unterhalb des Soll-Schmiermittel-Temperaturbereichs veranlasst die Kontrolleinheit 6 das Temperier-Element 9 zum Aufheizen des Schmiermittels 3. Die zugehörigen Steuer- und Regelbefehle werden über die Signalverbindung 8 zwischen der Kontrolleinheit 6 und dem Temperier-Element 9 ausgetauscht. In dem dargestellten Beispiel ist eine Steuer- und/oder Regelungseinheit 10 zwischengeschaltet in Bezug zur Kontrolleinheit 6 und dem Temperier-Element 9. Über die Steuer- und/oder Regelungseinheit 10 wird die Temperierung des Temperier-Elements geregelt und gesteuert (in Zusammenwirkung mit der Kontrolleinheit 6). Beispielsweise kann über die Steuerund/oder Regelungseinheit 10 eine Zuleitung von Heiz- oder Kühlmedium in den Hohlraum bzw. den Kanal des Temperier-Elements 9 in geeigneter Temperatur gesteuert bzw. geregelt werden. Dazu wirkt die Steuer- und/oder Regelungseinheit 10 mit geeigneten Zu- und Abführeinheiten (z.B. Pumpen) zusammen, die den Zulauf bzw. Ablauf des Heiz- oder Kühlmediums bewirken.

Wie die Figur 1 weiter zu erkennen gibt, ist die Kontrolleinheit 6 signaltechnisch (über eine kabellose oder kabelgebundene Signalverbindung 12) mit einer Druckmesseinheit 11 verbunden, die dazu eingerichtet ist, einen in dem Schmiermittelreservoir 1 vorliegenden Druck zu messen. Der damit ermittelte Druck kann zur Berechnung einer unteren Temperaturgrenze des Soll-Schmiermittel-Temperaturbereichs herangezogen werden. Der gemessene Druck repräsentiert dabei einen Kondensationsdruck von in dem Schmiermittelreservoir gasförmig vorliegenden Arbeitsmedium der Wärmepumpe.

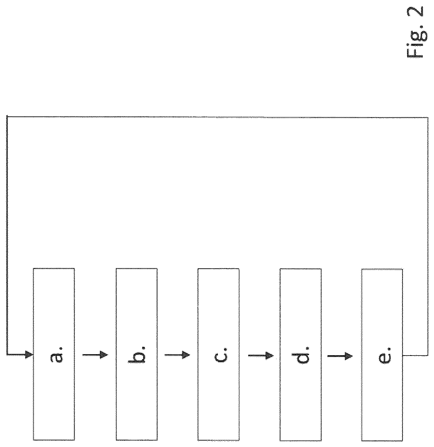

Die Figur 2 illustriert stark schematisiert den Verfahrensablauf des erfindungsgemäßen Verfahrens. Das vorgeschlagene Verfahren ist auf die Regelung einer Schmiermittel-Temperatur eines in einem Schmiermittelreservoir 1 eines Kompressor-Systems 2 einer von einem Arbeitsmedium durchströmten Wärmepumpe vorliegenden Schmiermittels 3 gerichtet.

In einem ersten Verfahrensschritt a. wird ein in dem Schmiermittelreservoir 1 vorliegender Druck gemessen (unter Einsatz der Druckmesseinheit 11). In einem zweiten Verfahrensschritt b. wird eine Kondensationstemperatur des Arbeitsmediums bei dem im Schritt a. gemessenen Druck ermittelt. Die Ermittlung (Berechnung) der Kondensationstemperatur erfolgt in der Kontrolleinheit 6. In einem nachfolgenden Verfahrensschritt c. wird ein Soll-Schmiermittel-Temperaturbereich festgelegt, wobei dessen untere Temperaturgrenze die im Schritt b. ermittelte Kondensationstemperatur des Arbeitsmediums ist, und wobei dessen obere Temperaturgrenze 2 K - 15 K, vorzugsweise 5 K - 10 K, oberhalb der Kondensationstemperatur des Arbeitsmediums liegt. Auch der Verfahrensschritt c. wird in der Kontrolleinheit 6 ausgeführt. In einem nachfolgenden Schritt d. wird eine Ist-Schmiermittel-Temperatur des Schmiermittels 3 gemessen, nämlich unter Einsatz der Temperaturmesseinheit 4. Daraufhin wird in einem Verfahrensschritt e. die Ist-Schmiermittel-Temperatur mit dem Soll-Schmiermittel-Temperaturbereich verglichen. Liegt die Ist-Schmiermittel-Temperatur oberhalb des Soll-Schmiermittel-Temperaturbereichs wird das Schmiermittel 3 gekühlt. Liegt die Ist-Schmiermittel-Temperatur unterhalb des Soll-Schmiermittel-Temperaturbereichs wird das Schmiermittel 3 aufgeheizt. Wie anhand der Pfeildarstellung in Figur 2 angedeutet, kann das Verfahren kontinuierlich ausgeführt werden, d.h. es findet eine kontinuierliche Überprüfung der Ist-Schmiermittel-Temperatur statt, gleichsam eine kontinuierliche Anpassung der Temperatur des Schmiermittels 3 (sofern erforderlich).

### Bezugszeichenliste

- 1: Schmiermittelreservoir
- 2: Kompressor-System
- 3: Schmiermittel
- 4: Temperaturmesseinheit
- 5: Kontaktthermometer
- 6: Kontrolleinheit
- 7: Signalverbindung
- 8: Signalverbindung
- 9: Temperier-Element
- 10: Steuer- und/oder Regelungseinheit
- 11: Druckmesseinheit
- 12: Signalverbindung

## Patentansprüche

1. Temperaturmanagementsystem für ein in einem Schmiermittelreservoir (1) eines Kompressor-Systems (2) einer von einem Arbeitsmedium durchströmten Wärmepumpe vorliegendes Schmiermittel (3), umfassend eine Temperaturmesseinheit (4), die dazu eingerichtet ist, eine Ist-Schmiermittel-Temperatur des in dem Schmiermittelreservoir (2) vorliegenden Schmiermittels (3) zu messen, eine Kontrolleinheit (6), die mit der Temperaturmesseinheit (4) signaltechnisch verbunden ist und dazu eingerichtet ist, zu überprüfen, ob die gemessene Ist-SchmiermittelTemperatur innerhalb eines Soll-Schmiermittel-Temperaturbereichs liegt, sowie ein mit der Kontrolleinheit (6) signaltechnisch verbundenes Temperier-Element (9), das dazu eingerichtet ist, das Schmiermittel (3) aufzuheizen oder zu kühlen, **dadurch gekennzeichnet, dass** die Kontrolleinheit (6) dazu eingerichtet ist,
a. das Temperier-Element (9) zum Kühlen des Schmiermittels (3) zu veranlassen, sofern die Ist-Schmiermittel-Temperatur oberhalb des Soll-Schmiermittel-Temperaturbereichs liegt, und
b. das Temperier-Element (9) zum Aufheizen des Schmiermittels (3) zu veranlassen, sofern die Ist-Schmiermittel-Temperatur unterhalb des Soll-Schmiermittel-Temperaturbereichs liegt,
und wobei eine Druckmesseinheit (11) mit der Kontrolleinheit (6) signaltechnisch verbunden ist, die dazu eingerichtet ist, einen in dem Schmiermittelreservoir (1) vorliegenden Druck zu messen, wobei der Soll-Schmiermittel-Temperaturbereich eine untere Temperaturgrenze aufweist, die einer Kondensationstemperatur des Arbeitsmediums bezogen auf einen in dem Schmiermittelreservoir vorliegenden Druck entspricht.

2. Temperaturmanagementsystem nach Anspruch 1, **dadurch gekennzeichnet, dass** der Soll-Schmiermittel-Temperaturbereich eine obere Temperaturgrenze aufweist, die 2 K - 15 K, vorzugsweise 5 K - 10 K, oberhalb der Kondensationstemperatur des Arbeitsmediums liegt.

3. Temperaturmanagementsystem nach einem der vorangehenden Ansprüche, **dadurch gekennzeichnet, dass** die Kontrolleinheit (6) dazu eingerichtet ist, die untere Temperaturgrenze zu einem vorgegebenen Zeitpunkt zu ermitteln, nämlich unter Berücksichtigung des in dem Schmiermittelreservoir (1) zu dem vorgegebenen Zeitpunkt gemessenen Drucks.

4. Temperaturmanagementsystem nach Anspruch 3, **dadurch gekennzeichnet, dass** die Kontrolleinheit (6) dazu eingerichtet ist, den Soll-Schmiermittel-Temperaturbereich dynamisch anzupassen, nämlich unter Berücksichtigung der ermittelten unteren Temperaturgrenze sowie einer oberen Temperaturgrenze, die 2 K - 15 K, vorzugsweise 5 K - 10 K, oberhalb der Kondensationstemperatur des Arbeitsmediums liegt.

5. Temperaturmanagementsystem nach einem der vorangehenden Ansprüche, **dadurch gekennzeichnet, dass** die Kontrolleinheit (6) dazu eingerichtet ist, die Ist-Schmiermittel-Temperatur derart zu regeln, dass diese stets innerhalb des Soll-Schmiermittel-Temperaturbereichs liegt.

6. Wärmepumpe, insbesondere Hochtemperaturwärmepumpe, umfassend ein nach einem der Ansprüche 1 bis 5 ausgebildetes Temperaturmanagementsystem.

7. Verfahren zum Regeln einer Schmiermittel-Temperatur eines in einem Schmiermittelreservoir (1) eines Kompressor-Systems (2) einer von einem Arbeitsmedium durchströmten Wärmepumpe vorliegenden Schmiermittels (3), umfassend die folgenden Schritte:
a. Messen eines in dem Schmiermittelreservoir (1) vorliegenden Drucks;
b. Ermitteln einer Kondensationstemperatur des Arbeitsmediums auf Basis im Schritt a. gemessenen Druck;
c. Festlegen eines Soll-Schmiermittel-Temperaturbereichs, wobei dessen untere Temperaturgrenze die im Schritt b. ermittelte Kondensationstemperatur ist, und wobei dessen obere Temperaturgrenze 2 K - 15 K, vorzugsweise 5 K - 10 K, oberhalb der Kondensationstemperatur des Arbeitsmediums liegt;
d. Messen einer Ist-Schmiermittel-Temperatur des in dem Schmiermittelreservoir (1) vorliegenden Schmiermittels (3);
e. Vergleichen der Ist-Schmiermittel-Temperatur mit dem Soll-Schmiermittel-Temperaturbereich, und sodann
- Kühlen des Schmiermittels (3), sofern die Ist-SchmiermittelTemperatur oberhalb des Soll-Schmiermittel-Temperaturbereichs liegt, oder
- Aufheizen des Schmiermittels (3), sofern die Ist-SchmiermittelTemperatur unterhalb des Soll-Schmiermittel-Temperaturbereichs liegt.

8. Verfahren nach Anspruch 7, **dadurch gekennzeichnet, dass** das Verfahren kontinuierlich oder in einem vorgegebenen Zeitintervall ausgeführt wird.

9. Verfahren nach Anspruch 7 oder 8, **dadurch gekennzeichnet, dass** die Ist-Schmiermittel-Temperatur derart geregelt wird, dass diese stets innerhalb des Soll-Schmiermittel-Temperaturbereichs liegt.

## Claims

1. Temperature management system for a lubricant (3) present in a lubricant reservoir (1) of a compressor system (2) of a heat pump through which a working medium flows, comprising a temperature measurement unit (4), which is designed to measure an actual lubricant temperature of the lubricant (3) present in the lubricant reservoir (2), a control unit (6), which is connected to the temperature measurement unit (4) by means of signals and is designed to check whether the measured actual lubricant temperature is within a setpoint lubricant temperature range, as well as a temperature control element (9) connected to the control unit (6) by means of signals, which is designed to heat up or cool the lubricant (3), **characterized in that** the control unit (6) is designed to
a. cause the temperature control element (9) to cool the lubricant (3) if the actual lubricant temperature is above the setpoint lubricant temperature range, and
b. cause the temperature control element (9) to heat up the lubricant (3) if the actual lubricant temperature is below the setpoint lubricant temperature range,
and wherein a pressure measurement unit (11) is connected to the control unit (6) by means of signals, which is designed to measure a pressure present in the lubricant reservoir (1), wherein the setpoint lubricant temperature range has a lower temperature limit, which corresponds to a condensation temperature of the working medium in relation to a pressure present in the lubricant reservoir.

2. Temperature management system according to Claim 1, **characterized in that** the setpoint lubricant temperature range has an upper temperature limit, which is is 2 K - 15 K, preferably 5 K - 10 K, above the condensation temperature of the working medium.

3. Temperature management system according to one of the preceding claims, **characterized in that** the control unit (6) is designed to determine the lower temperature limit at a specified time, namely taking into account the pressure measured in the lubricant reservoir (1) at the specified time.

4. Temperature management system according to Claim 3, **characterized in that** the control unit (6) is designed to dynamically adjust the setpoint lubricant temperature range, namely taking into account the determined lower temperature limit as well as an upper temperature limit, which is 2 K - 15 K, preferably 5 K - 10 K, above the condensation temperature of the working medium.

5. Temperature management system according to one of the preceding claims, **characterized in that** the control unit (6) is designed to regulate the actual lubricant temperature in such a way that it is always within the setpoint lubricant temperature range.

6. Heat pump, in particular high-temperature heat pump, comprising a temperature management system designed according to one of Claims 1 to 5.

7. Method for regulating a lubricant temperature of a lubricant (3) present in a lubricant reservoir (1) of a compressor system (2) of a heat pump through which a working medium flows, comprising the following steps:
a. measuring a pressure present in the lubricant reservoir (1);
b. determining a condensation temperature of the working medium based on the pressure measured in step a.;
c. defining a setpoint lubricant temperature range, wherein its lower temperature limit is the condensation temperature determined in step b., and wherein its upper temperature limit is 2 K - 15 K, preferably 5 K - 10 K, above the condensation temperature of the working medium;
d. measuring an actual lubricant temperature of the lubricant (3) present in the lubricant reservoir (1);
e. comparing the actual lubricant temperature to the setpoint lubricant temperature range, and then
- cooling the lubricant (3) if the actual lubricant temperature is above the setpoint lubricant temperature range, or
- heating up the lubricant (3) if the actual lubricant temperature is below the setpoint lubricant temperature range.

8. Method according to Claim 7, **characterized in that** the method is carried out continuously or at a specified time interval.

9. Method according to Claim 7 or 8, **characterized in that** the actual lubricant temperature is regulated in such a way that it is always within the setpoint lubricant temperature range.

## Revendications

1. Système de gestion de la température pour un lubrifiant (3) présente dans un réservoir de lubrifiant (1) d'un système de compresseur (2) d'une pompe à chaleur traversée par un fluide de travail, comportant une unité de mesure de la température (4), laquelle est configurée pour mesurer une température de lubrifiant réelle du lubrifiant (3) présent dans le réservoir de lubrifiant (1), une unité de commande (6) reliée par signal à l'unité de mesure de la température (4) et configurée pour vérifier si la température de lubrifiant réelle mesurée se situe dans une plage de température de lubrifiant de consigne, ainsi qu'un élément de thermorégulation (9) relié par signal à l'unité de commande (6), lequel est configuré pour chauffer ou refroidir le lubrifiant (3), **caractérisé en ce que** l'unité de commande (6) est configurée pour
a. amener l'élément de thermorégulation (9) à refroidir le lubrifiant (3), si la température de lubrifiant réelle est supérieure à la plage de température de lubrifiant de consigne, et
b. amener l'élément de thermorégulation (9) à chauffer le lubrifiant (3), si la température de lubrifiant réelle est inférieure à la plage de température de lubrifiant de consigne,
et dans lequel une unité de mesure de la pression (11) configurée pour mesurer une pression présente dans le réservoir de lubrifiant (1) est reliée par signal à l'unité de commande (6), dans lequel la plage de température de lubrifiant de consigne présente une limite de température inférieure correspondant à une température de condensation du fluide de travail rapportée à une pression présente dans le réservoir de lubrifiant.

2. Système de gestion de la température selon la revendication 1, **caractérisé en ce que** la plage de température de lubrifiant de consigne présente une limite de température supérieure, laquelle se situe de 2 K à 15 K, de préférence de 5 K à 10 K, au-dessus de la température de condensation du fluide de travail.

3. Système de gestion de la température selon l'une des revendications précédentes, **caractérisé en ce que** l'unité de commande (6) est configurée pour déterminer la limite de température inférieure à un moment prédéfini, notamment en tenant compte de la pression mesurée dans le réservoir de lubrifiant (1) au moment prédéfini.

4. Système de gestion de la température selon la revendication 3, **caractérisé en ce que** l'unité de commande (6) est configurée pour adapter dynamiquement la plage de température de lubrifiant de consigne, notamment en tenant compte de la limite de température inférieure déterminée ainsi que d'une limite de température supérieure, laquelle se situe de 2 K à 15 K, de préférence de 5 K à 10 K, au-dessus de la température de condensation du fluide de travail.

5. Système de gestion de la température selon l'une des revendications précédentes, **caractérisé en ce que** l'unité de commande (6) est configurée pour régler la température de lubrifiant réelle de manière à ce que celle-ci se situe toujours dans la plage de température de lubrifiant de consigne.

6. Pompe à chaleur, en particulier une pompe à chaleur haute température, comportant un système de gestion de la température conçu selon l'une des revendications 1 à 5.

7. Procédé de réglage d'une température de lubrifiant d'un lubrifiant (3) présent dans un réservoir de lubrifiant (1) d'un système de compresseur (2) d'une pompe à chaleur traversée par un fluide de travail, comportant les étapes suivantes :
a. mesure d'une pression présente dans le réservoir de lubrifiant (1) ;
b. détermination d'une température de condensation du fluide de travail sur la base de la pression mesurée dans l'étape a. ;
c. définition d'une plage de température de lubrifiant de consigne, dont la limite de température inférieure est la température de condensation déterminée dans l'étape b., et dont la limite de température supérieure se situe de 2 K à 15 K, de préférence de 5 K à 10 K, au-dessus de la température de condensation du fluide de travail ;
d. mesure d'une température de lubrifiant réelle du lubrifiant (3) présent dans le réservoir de lubrifiant (1) ;
e. comparaison de la température de lubrifiant réelle avec la plage de température de lubrifiant de consigne, puis
- refroidissement du lubrifiant (3) si la température de lubrifiant réelle est supérieure à la plage de température de lubrifiant de consigne, ou
- chauffage du lubrifiant (3) si la température de lubrifiant réelle est inférieure à la plage de température de lubrifiant de consigne.

8. Procédé selon la revendication 7, **caractérisé en ce que** le procédé est mis en œuvre de façon continue ou dans un intervalle de temps prédéfini.

9. Procédé selon la revendication 7 ou 8, **caractérisé en ce que** la température de lubrifiant réelle est réglée de manière à ce que celle-ci se situe toujours dans la plage de température de lubrifiant de consigne.
